# EUROPEAN PATENT APPLICATION

(11) **EP 4 549 597 A1**
(43) Date of publication of application: **07.05.2025**
(21) Application number: 22949304.4
(22) Date of filing: 28.06.2022
(51) Int. Cl.: C21D 9/28, C21D 1/10, C21D 1/62, H05B 6/06, H05B 6/10, H05B 6/14, H05B 6/36

(54) **TRAVERSE HARDENING DEVICE AND TRAVERSE HARDENING METHOD**

(71) Applicant: NIPPON STEEL CORPORATION, Chiyoda-ku Tokyo 100-8071 (JP)
(72) Inventor: YAMANE, Akihito, Tokyo 100-8071 (JP); HATA, Toshiyuki, Tokyo 100-8071 (JP); KOZUKA, Chihiro, Tokyo 100-8071 (JP)
(74) Representative: Zimmermann & Partner Patentanwälte mbB
(86) International application number: PCT/JP2022/025739
(87) International publication number: WO 2024/004027

(57) **Abstract**

The present traverse hardening device is a device that performs traverse hardening on a shaft-like body in which a large diameter portion having a relatively large outer diameter and a small diameter portion having a relatively small outer diameter are connected via a level difference portion, the device including: a plurality of first divided coils annularly arranged around a motion center line at a first position on the motion center line; a plurality of second divided coils annularly arranged around the motion center line at a second position different from the first position on the motion center line; a first divided coil drive unit configured to bring the first divided coils close to and away from the motion center line; a second divided coil drive unit configured to bring the second divided coils close to and away from the motion center line; and a control unit configured to control the first divided coil drive unit and the second divided coil drive unit.

## Description

### Technical Field

The present disclosure relates to a traverse hardening device and a traverse hardening method.

### Background Art

Conventionally, traverse hardening is performed on a shaft-like body by induction heating to increase fatigue strength of the shaft-like body. The term "traverse hardening" as used herein means that hardening is performed while a coil member or the like is moved in an axial direction with respect to a shaft-like body.

Specifically, a shaft-like body is induction-heated by causing a current to flow through a coil while the coil is moved along an outer circumferential surface in a longitudinal direction of the shaft-like body. Then, the shaft-like body is rapidly cooled and hardened by spraying a coolant to the outer circumferential surface immediately after heating. Here, when the shaft-like body is a stepped shaft having a level difference portion in which an outer diameter changes from a large diameter to a small diameter or from a small diameter to a large diameter at an intermediate position in a longitudinal direction thereof, it is necessary to appropriately adjust an air gap between the outer circumferential surface of the shaft-like body and the coil in order to maintain heating efficiency.

As one of device configurations that enable such adjustment, there is a mode in which the coil is constituted by a plurality of divided coils. Specifically, the plurality of divided coils are arranged in a circumferential direction of the shaft-like body, and these divided coils are connected in series to a power source. Then, these divided coils are moved in a longitudinal direction of the shaft-like body while a current from the power source flows through the divided coils. Then, immediately before the divided coils reach a level difference portion, the divided coils are brought close to or away from an outer circumferential surface of the shaft-like body depending on a change in the outer diameter dimension of the shaft-like body, whereby the air gap is maintained substantially constant.

A conventional high-frequency induction heating device using this type of divided coil is disclosed in Patent Document 1 below. The device includes a high-frequency induction heating coil as the divided coil. This high-frequency induction heating coil adopts a configuration of "a shaft-shaped member heating high-frequency induction heating coil for performing high-frequency induction heating, in a shaft-shaped member having a flange section and a shaft portion erected at a central portion of the flange section, an arc portion formed between the flange section and the shaft portion intersecting with each other and a outer circumferential surface of the shaft portion, the high-frequency induction heating coil including a pair of high-frequency induction heating coil components disposed at positions facing each other across an axis of the shaft-shaped member and disposed facing the arc portion and the shaft portion at a position spaced apart from the arc portion and the shaft portion of the shaft-shaped member, in which a bent coil portion bent so as to protrude in a direction away from the axis of the shaft-shaped member is formed in each of the pair of high-frequency induction heating coil components".

There is description that, according to the device, "by using the pair of high-frequency induction heating coil components, the pair of high-frequency induction heating coil components described above can be disposed correspondingly to all of various shaft-shaped members having different diameters of outer circumferential surfaces".

### Citation List

### Patent Document

Patent Document 1: Japanese Unexamined Patent Application, First Publication No. 2008-150640

### Summary of Invention

### Technical Problem

By the way, in a conventional traverse hardening device including the above device, the number of windings of the divided coil is one, and the number of windings cannot be increased to two or more due to structural reasons. This is because when the number of windings is increased by overlapping a plurality divided coils along a longitudinal direction of a shaft-like body, traverse hardening cannot appropriately performed on a level difference portion where an outer diameter of the shaft-like body changes. For example, in traverse hardening of a level difference portion from a large diameter portion toward a small diameter portion, the divided coils cannot be brought close to the small diameter portion until the entire divided coils overlapping with each other in the longitudinal direction of the shaft-like body pass the large diameter portion. Therefore, a portion of the divided coils on a front side in a traveling direction, which has reached the small diameter portion after finishing heating of the large diameter portion, performs induction heating while having a wide air gap with an outer circumferential surface of the small diameter portion, which is not preferable from a viewpoint of heating efficiency and irregular hardening pattern.

On the other hand, in traverse hardening of a level difference portion from the small diameter portion toward the large diameter portion, even in the middle of heating the small diameter portion, a portion on a rear side in a traveling direction in the divided coils overlapping with each other in the longitudinal direction of the shaft-like body cannot get over the level difference portion unless the portion on the rear side is moved away early from the outer circumferential surface of the small diameter portion at a point of time before a portion on the front side in the traveling direction reaches the large diameter portion. Therefore, the result is also not preferable from a viewpoint of heating efficiency and irregular hardening pattern.

For the reasons described above, the number of windings of the divided coil up to now cannot be two or more, and one winding is normal. In the case of one winding, it is necessary to set a current flowing through the divided coil to an extremely high current as compared with a case of a plurality of windings, and thus problems such as overheating and short circuit of the divided coil are likely to occur.

The present disclosure has been made in view of the above circumstances, and an object of the present disclosure is to provide a traverse hardening device and a traverse hardening method capable of performing traverse hardening on a stepped shaft while suppressing overheating and short circuit of a divided coil due to a large current. Solution to Problem

In order to solve the problem described above, the present disclosure proposes the following aspects.
(1) A traverse hardening device according to an aspect of the present disclosure performs traverse hardening on a shaft-like body in which a large diameter portion having a relatively large outer diameter and a small diameter portion having a relatively small outer diameter are connected via a level difference portion, the device including:
   a plurality of first divided coils annularly arranged around a motion center line at a first position on the motion center line;
   a plurality of second divided coils annularly arranged around the motion center line at a second position different from the first position on the motion center line;
   a first divided coil drive unit configured to bring the first divided coils close to and away from the motion center line;
   a second divided coil drive unit configured to bring the second divided coils close to and away from the motion center line; and
   a control unit configured to control the first divided coil drive unit and the second divided coil drive unit.

According to the traverse hardening device described in the above (1), a high-frequency current flows through the first divided coils and the second divided coils while moving the first divided coils and the second divided coils in a state where the first divided coils and the second divided coils are arranged around the shaft-like body and overlap each other in a direction along the motion center line. Then, electromagnetic induction occurs between the first divided coils/second divided coils and the shaft-like body, and the shaft-like body is induction-heated.

When the shaft-like body is induction-heated while the first divided coils and the second divided coils are moved in this manner, in a case where the first divided coils induction-heat the level difference portion while the second divided coils induction-heat the small diameter portion, the control unit drives the first divided coil drive unit to gradually move the positions of the first divided coils outward in a radial direction of the shaft-like body. By this movement, the first divided coils can be moved along an outer circumferential surface without interfering with the level difference portion while the second divided coils are kept along a periphery of the small diameter portion.

Furthermore, when the second divided coils induction-heat the level difference portion, and at the same time, the first divided coils induction-heat the large diameter portion, the control unit drives the second divided coil drive unit to gradually move the positions of the second divided coils outward in a radial direction of the shaft-like body. As a result, the second divided coils can be moved along an outer circumferential surface of the level difference portion without interfering with the level difference portion while the first divided coils are kept along a periphery of the large diameter portion.

On the other hand, when the small diameter portion is induction-heated from the large diameter portion beyond the level difference portion, contrary to the above procedure, the first divided coil drive unit brings the first divided coils close to an outer circumferential surface of the shaft-like body, and the second divided coil drive unit brings the second divided coils close to the outer circumferential surface of the shaft-like body. The approach operations of the first divided coils and the second divided coils to the shaft-like body are individually performed depending on outer diameters of portions to be induction-heated by the first divided coils and the second divided coils.

Therefore, it is possible to solve the problem of interference with the shaft-like body that occurs when the first divided coils and the second divided coils overlap each other in the direction of the motion center line. As a result, since traverse hardening can be performed by a two or more-winding divided coil (the first divided coil and the second divided coil), a current value of a high-frequency current flowing through each of the divided coils can be significantly reduced as compared with that of a one-winding coil.

Note that the coil that heats the shaft-like body is not limited to the two coils of the first divided coil and the second divided coil. Three or more divided coils may be overlapped in the direction of the motion center line. In this case, it is preferable to adopt three or more divided coil drive units as many as the divided coils.

(2) In the traverse hardening device described in the above (1), the following configuration may be adopted:
a high-frequency power source is further included, and
the control unit individually is configured to control a current value of a high-frequency current flowing from the high-frequency power source to the first divided coils and a current value of a high-frequency current flowing from the high-frequency power source to the second divided coils.

According to the traverse hardening device described in the above (2), since the control unit individually controls a current value in the first divided coils and a current value in the second divided coils, the current value can be adjusted to a current value suitable for a heating portion of the shaft-like body. For example, when a corner portion formed at a connection portion between the level difference portion and the large diameter portion is heated by the first divided coils, by increasing a current value in the first divided coils, the corner portion can be sufficiently heated without reducing a moving speed of the first divided coils.

Note that, as a method for heating the corner portion to a higher temperature, it is also conceivable to reduce the moving speed when the first divided coils pass the corner portion. However, in this case, it is necessary to reduce a moving speed of the cooling ring that cools the shaft-like body after heating. Therefore, the moving speed of the cooling ring cannot be made constant in an axial direction, and uneven cooling occurs. On the other hand, in the present aspect, since it is not necessary to reduce the moving speed, there is an advantage that such a trouble does not occur.

(3) In the traverse hardening device described in the above (2), the following configuration may be adopted:
a variable resistor configured to electrically connect the first divided coils and the second divided coils and allow the high-frequency current from the high-frequency power source to flow therethrough is further included, and
the control unit is configured to distribute and supply the high-frequency current from the high-frequency power source to the first divided coils and the second divided coils while controlling the variable resistor.

According to the traverse hardening device described in the above (3), the control unit controls the variable resistor, whereby a current value of a high-frequency current flowing through the first divided coils and a current value of a high-frequency current flowing through the second divided coils can be adjusted to either different values or the same value. Therefore, a high-frequency current corresponding to a heating portion of the shaft-like body can be set for each of the first divided coils and the second divided coils.

(4) A traverse hardening method according to an aspect of the present disclosure is for performing traverse hardening on a shaft-like body in which a large diameter portion having a relatively large outer diameter and a small diameter portion having a relatively small outer diameter are connected via a level difference portion, the method including:
performing the traverse hardening on the shaft-like body using a plurality of first divided coils annularly arranged around a motion center line at a first position on the motion center line, and a plurality of second divided coils annularly arranged around the motion center line at a second position on the motion center line; and
individually bringing the first divided coils and the second divided coils close to and away from an outer circumferential surface of the shaft-like body during the traverse hardening.

According to the traverse hardening method described in the above (4), it is possible to obtain the same effect as the effect of the traverse hardening device described in the above (1). Therefore, it is possible to solve the problem of interference with the shaft-like body that occurs when the first divided coils and the second divided coils overlap each other in the direction of the motion center line. As a result, since traverse hardening can be performed by a two or more-winding divided coil (the first divided coil and the second divided coil), a current value of a high-frequency current flowing through each of the divided coils can be significantly reduced as compared with that of a one-winding coil.

(5) In the traverse hardening method described in the above (4), a current value of a high-frequency current flowing through the first divided coils and a current value of a high-frequency current flowing through the second divided coils may be individually controlled during the traverse hardening.

According to the traverse hardening method described in the above (5), it is possible to obtain the same effect as the effect of the traverse hardening device described in the above (2). Therefore, since traverse hardening can be performed while the moving speeds of the first divided coils and the second divided coils are kept constant, uneven cooling can be suppressed while a moving speed of the cooling ring following the first divided coils and the second divided coils is also kept constant.

### Advantageous Effects of Invention

According to the traverse hardening device and the traverse hardening method according to the aspects described above, it is possible to perform traverse hardening on the stepped shaft while suppressing overheating and short circuit of the divided coil due to a large current.

### Brief Description of Drawings

FIG. 1 is a side view schematically illustrating a part of a traverse hardening device according to an embodiment of the present disclosure in a broken state.
FIG. 2 is a view of a pair of first divided coils included in the traverse hardening device as viewed from above, and is a view taken in a direction of an arrow A-A in FIG. 1. FIG. 2(a) illustrates a state in which a small diameter portion is induction-heated by narrowing a space between first divided coils, and FIG. 2(b) illustrates a state in which a large diameter portion is induction-heated by expanding the space between the first divided coils.
FIG. 3 is a circuit diagram schematically illustrating electrical connection between a high-frequency power source and the first divided coil/second divided coil.
FIG. 4 is a flowchart illustrating a traverse hardening method in the present embodiment.
FIG. 5 is a view illustrating a state in which a shaft-like body is hardened while movement is performed via a level difference portion, and is a longitudinal cross-sectional view of a portion B in FIG. 1. The traverse hardening is performed in order of (a), (b), and (c).
FIG. 6 is a view illustrating a simulation result of a traverse hardening device, and is a longitudinal cross-sectional view of a portion including the portion B in FIG. 1. FIG. 9(a) illustrates Conventional Example, and FIG. 9(b) illustrates Example. Description of Embodiments

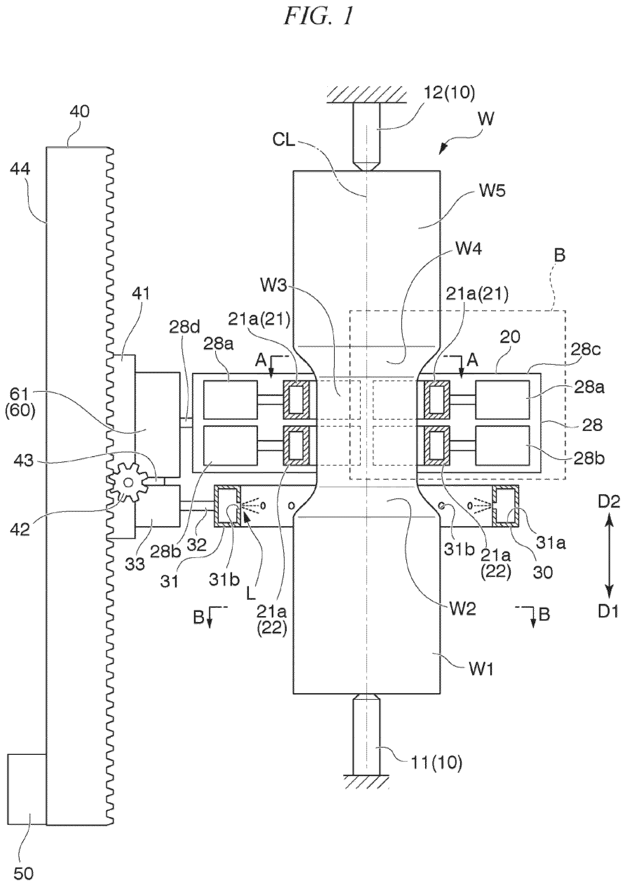

Hereinafter, an embodiment of a traverse hardening device and a traverse hardening method according to the present disclosure will be described with reference to the drawings. In the following description, a direction along a central axis CL of a shaft-like body W may be referred to as a longitudinal direction, a radial direction of the shaft-like body W around the central axis CL may be simply referred to as a radial direction, and a circumferential direction of the shaft-like body W may be referred to as a circumferential direction. A motion center line which is a center line of the first divided coils and the second divided coils is used in order to indicate a direction in which the first divided coils and the second divided coils included in the traverse hardening device are moved. The motion center line is a straight line coinciding with the central axis CL. In FIG. 1, an upper side of the drawing along the motion center line may be simply referred to as an upper side, and a lower side of the drawing may be simply referred to as a lower side.

### <Traverse hardening device>

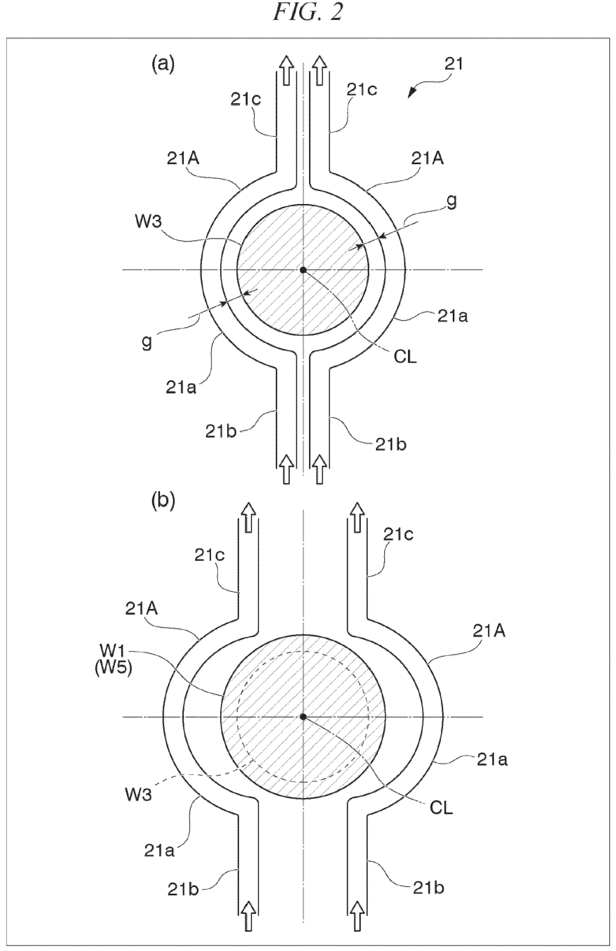

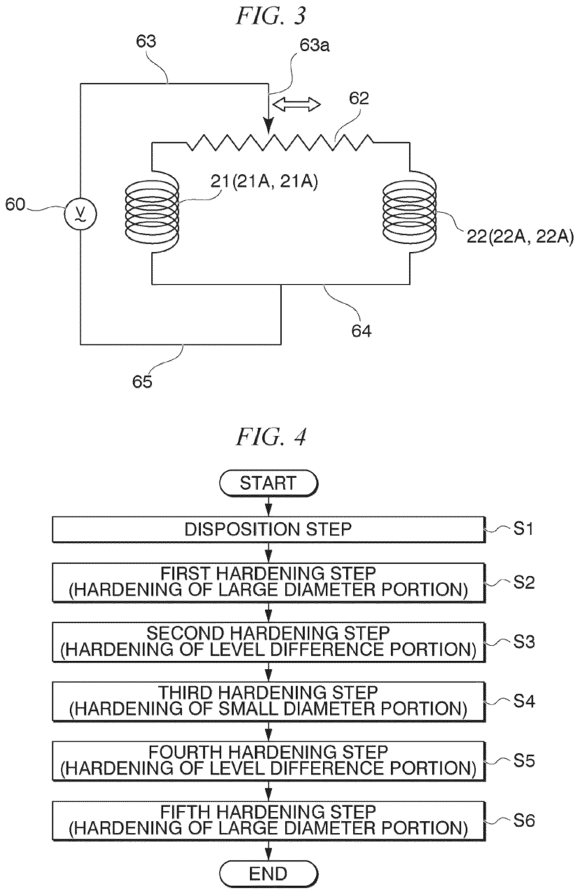

First, a configuration of a traverse hardening device according to the present embodiment will be described with reference to FIGS. 1 to 3. Here, FIG. 1 is a side view schematically illustrating a part of the traverse hardening device in a broken state. FIG. 2 is a view of a pair of first divided coils included in the traverse hardening device as viewed from above, and is a view taken in a direction of an arrow A-A in FIG. 1. FIG. 3 is a circuit diagram schematically illustrating electrical connection between a high-frequency power source and the first divided coil/second divided coil.

A traverse hardening device 1 illustrated in FIG. 1 is a device that performs traverse hardening on a railway vehicle axle or a shaft-like body W such as a ball screw using a high-frequency current.

First, the shaft-like body W will be described. The shaft-like body W is a stepped shaft in which a large diameter portion W1, a level difference portion W2, a small diameter portion W3, a level difference portion W4, and a large diameter portion W5 are coaxially disposed in this order from a lower side to an upper side in a longitudinal direction thereof. The large diameter portions W1 and W5 are cylinders having a circular flat cross section, and have the largest outer diameter in the whole shaft-like body W. The small diameter portion W3 is a cylinder having a circular flat cross section, and has an outer diameter smaller than those of the large diameter portions W1 and W5. The level difference portion W2 has a truncated cone shape connecting an upper end of the large diameter portion W1 and a lower end of the small diameter portion W3. An outer diameter of the level difference portion W2 gradually decreases from the same outer diameter as the large diameter portion W1 in an upward direction, and becomes equal to an outer diameter of the lower end of the small diameter portion W3. The level difference portion W4 has an inverted truncated cone shape connecting an upper end of the small diameter portion W1 and a lower end of the large diameter portion W5. An outer diameter of the level difference portion W4 gradually increases from the same outer diameter as an outer diameter of the upper end of the small diameter portion W3 in the upward direction, and becomes equal to an outer diameter of the lower end of the large diameter portion W5. The large diameter portion W1, the level difference portion W2, the small diameter portion W3, the level difference portion W4, and the large diameter portion W5 share the central axis CL. When the outer diameter dimension of each of the large diameter portions W1 and W5 is 100%, the outer diameter dimension of the small diameter portion W3 is, for example, 80% to 90%.

The shaft-like body W is formed of a material having conductivity, such as carbon steel or low alloy steel containing 95% by weight or more of iron (Fe), which includes ferrite phase.

As illustrated in FIG. 1, the traverse hardening device includes a support portion 10, an induction heating unit 20, a cooling unit 30, a moving unit 40, a control unit 50, and a power source 60.

As illustrated in FIG. 1, the support portion 10 includes a lower center 11 and an upper center 12. The lower center 11 coaxially supports the large diameter portion W1 of the shaft-like body W from below. The upper center 12 coaxially supports the large diameter portion W5 of the shaft-like body W from above. The lower center 11 and the upper center 12 support the shaft-like body W such that the central axis CL of the shaft-like body W extends in the vertical direction, one end side (a side where the large diameter portion W1 is present) of the shaft-like body W is located on a lower side, and the other end (a side where the large diameter portion W5 is present) of the shaft-like body W is located on an upper side. The shaft-like body W is disposed between the lower center 11 and the upper center 12 so as to be rotatable about the central axis CL. The lower center 11 and the upper center 12 pivotally supporting the shaft-like body W in this manner rotate the shaft-like body W about the central axis CL when receiving a driving force from a shaft-like body rotary motor (not illustrated) included in the support portion 10.

As illustrated in FIG. 1, the induction heating unit 20 includes a plurality of coils and a coil support base 28.

In the present embodiment, two coils of an upper coil 21 and a lower coil 22 are adopted as the plurality of coils. The upper coil 21 and the lower coil 22 have the same configuration. Therefore, first, the upper coil 21 will be described below. The lower coil 22 is assumed to be the same as the upper coil 21, and the same reference numeral is used, whereby redundant description will be omitted. Note that the coil that heats the shaft-like body W is not limited to the two coils of the upper coil 21 and the lower coil 22. Three or more coils may be overlapped in the direction of the motion center line.

As illustrated in FIG. 2(a), the upper coil 21 includes a pair of divided coils 21A annularly arranged around the motion center line (central axis CL). Each of the divided coils 21A includes a coil main body portion 21a, a first conductive wire portion 21b, and a second conductive wire portion 21c.

The coil main body portion 21a has an arc shape protruding in the radial direction around the central axis CL. An inner circumferential surface of the coil main body portion 21a is a recessed arc surface around the central axis CL, and is disposed with a constant gap dimension g in a circumferential direction with respect to an outer circumferential surface of the small diameter portion W3. The coil main body portion 21a induction-heats a range of approximately a half circumferential portion (180° portion) in a circumferential direction of the shaft-like body W. Note that, as the shape of the coil main body portion 21a, instead of the arc shape, an L shape or a V shape protruding in a direction away from the central axis CL may be adopted.

The first conductive wire portion 21b is electrically and mechanically connected to one end of the coil main body portion 21a, and extends straight substantially outward in the radial direction. The second conductive wire portion 21c is electrically and mechanically connected to the other end of the coil main body portion 21a, and extends straight substantially outward in the radial direction. The first conductive wire portion 21b and the second conductive wire portion 21c extend along a common straight line.

The pair of divided coils 21A having the above configuration forms one heating coil coaxially disposed around the shaft-like body W by a combination of the two coil main body portions 21a. When the small diameter portion W3 is induction-heated, by narrowing a relative distance between the pair of divided coils 21A, the pair of coil main body portions 21a is disposed with the gap g around the small diameter portion W3.

On the other hand, as illustrated in FIG. 2(b), when the large diameter portions W1 and W5 are induction-heated, by expanding the relative distance between the pair of divided coils 21A, the pair of coil main body portions 21a is disposed around the large diameter portions W1 and W5.

When the level difference portions W2 and W4 are induction-heated, by expanding or narrowing the relative distance between the pair of divided coils 21A depending on a change in the outer diameters of the level difference portions, the pair of coil main body portions 21a is disposed around the level difference portions W2 and W4.

Note that when the relative distance between the pair of divided coils 21A is adjusted depending on an outer diameter of a heating portion of the shaft-like body W, the gap g is adjusted to be minimized within a range not interfering with the heating portion.

The upper coil 21 has been described above. In order to give description by distinguishing the divided coil 21A of the upper coil 21 from a divided coil of the lower coil 22, the following description will be given by imparting a reference numeral 22A to the divided coil of the lower coil 22.

As illustrated in FIG. 1, the upper coil 21 and the lower coil 22 are coaxially disposed such that the upper coil 21 is overlapped on the lower coil 22. That is, the coil main body portions 21a of the upper coil 21 are coaxially overlapped on the coil main body portions 21a of the lower coil 22. Note that, as for a circumferential direction arrangement of the lower coil 22 and the upper coil 21, the first conductive wire portion 21b and the second conductive wire portion 21c of the lower coil 22 may overlap the first conductive wire portion 21b and the second conductive wire portion 21c of the upper coil 21 in plane view.

Alternatively, the first conductive wire portions 21b and the second conductive wire portions 21c of the lower coil 22 do not have to overlap the first conductive wire portions 21b and the second conductive wire portions 21c of the upper coil 21 in plane view. In this case, a gap (non-heating range) formed between the first conductive wire portions 21b of the lower coil 22 and a gap (non-heating range) formed between the second conductive wire portions 21c can be covered by heating by the coil main body portions 21a of the upper coil 21. Conversely, a gap (non-heating range) formed between the first conductive wire portions 21b of the upper coil 21 and a gap (non-heating range) formed between the second conductive wire portions 21c can be covered by heating by the coil main body portions 21a of the lower coil 22.

In each of the upper coil 21 and the lower coil 22, the number of divisions of the coil is two, but is not limited to two, and may be three or more. For example, when the number of divisions is three, an angular range of about 120° in the circumferential direction of the shaft-like body W is heated by one divided coil.

Each of the upper coil 21 and the lower coil 22 described above is manufactured by bending, brazing, or the like a hollow pipe having a rectangular cross section, and has conductivity. Each end portion of the first conductive wire portion 21b and the second conductive wire portion 21c is electrically and mechanically connected to a current transformer 61 of the power source 60 illustrated in FIG. 1. The current transformer 61 causes a high-frequency current to flow through each of the upper coil 21 and the lower coil 22.

The upper coil 21 and the lower coil 22 can cool the upper coil 21 and the lower coil 22 by causing a coolant to flow in pipes thereof.

Returning to FIG. 1, the coil support base 28 supports the upper coil 21 and the lower coil 22 coaxially with the shaft-like body W in a state where the upper coil 21 and the lower coil 22 overlap each other in an extending direction of the motion center line. The coil support base 28 includes a first guide section and a second guide section (not illustrated), a first divided coil drive unit 28a and a second divided coil drive unit 28b, and a support base body 28c.

The first guide section and the second guide section, and the first divided coil drive unit 28a and the second divided coil drive unit 28b are fixed to the support base body 28c. The support base body 28c is connected to and supported by the current transformer 61 described later via a stay 28d.

As illustrated in FIGS. 2(a) and 2(b), the first guide section guides the divided coils 21A of the upper coil 21 so as to be brought close to and away from each other. Examples of the first guide section include a linear guide laid along the approach and separation direction.

The first divided coil drive unit 28a applies, to the divided coils 21A, a driving force to bring the divided coils 21A close to and away from each other. A combination of a stepping motor and a ball screw can be used as the first divided coil drive unit 28a. Note that, in the present embodiment, one first divided coil drive unit 28a is disposed for each of the divided coils 21A, but the present invention is not limited to this configuration. A pair of divided coils 21A may be brought close to and away from each other using one first divided coil drive unit 28a as a common drive source.

Similarly to the first guide section, the second guide section guides the divided coils 22A of the lower coil 22 so as to be brought close to and away from each other. Examples of the second guide section include a linear guide laid along the approach and separation direction.

The second divided coil drive unit 28b applies, to the divided coils 22A, a driving force to bring the divided coils 22A close to and away from each other. A combination of a stepping motor and a ball screw can be used as the second divided coil drive unit 28b. Note that, in the present embodiment, one second divided coil drive unit 28b is disposed for each of the divided coils 22A, but the present invention is not limited to this configuration. A pair of divided coils 22A may be brought close to and away from each other using one second divided coil drive unit 28b as a common drive source.

As illustrated in FIG. 1, the cooling unit 30 includes a cooling ring 31, a cooling ring support stay 32, and a coolant circulation pump 33.

The cooling ring 31 is formed in an annular shape. An internal space 31a is formed in the cooling ring 31. On an inner circumferential surface of the cooling ring 31, a plurality of nozzles 31b communicating with the internal space 31a are formed spaced apart from each other in the circumferential direction. The shaft-like body W is coaxially inserted into the cooling ring 31. The cooling ring 31 is disposed below the divided coils 21.

The cooling ring 31 is connected to and supported by the coolant circulation pump 33 via the cooling ring support stay 32. The coolant circulation pump 33 supplies a coolant L such as water into the internal space 31a of the cooling ring 31. The coolant L supplied to the internal space 31a is ejected toward the shaft-like body W through the plurality of nozzles 31b to cool the shaft-like body W.

The moving unit 40 illustrated in FIG. 1 includes a support plate 41, a pinion gear 42, a motor 43, and a rack 44.

The support base body 28c, the current transformer 61, the cooling ring 31, and the coolant circulation pump 33 are fixed to the support plate 41. The pinion gear 42 is rotatably fixed to the support plate 41. The motor 43 that rotationally drives the pinion gear 42 is attached to the support plate 41.

The support plate 41 is connected to the rack 44 via a guide rail (not illustrated). The support plate 41 is movable in the vertical direction relative to the rack 44 by the guide rail. The pinion gear 42 meshes with teeth of the rack 44. Therefore, when the control unit 50 drives the motor 43, the pinion gear 42 rotates, and the support plate 41 moves upward or downward with respect to the rack 44.

As illustrated in FIG. 3, the upper coil 21 and the lower coil 22 are connected in parallel to the power source 60. That is, one end of the upper coil 21 (one end of each of the divided coils 21A) and one end of the lower coil 22 (one end of each of the divided coils 22A) are electrically connected via the variable resistor 62. To the variable resistor 62, a slider 63a connected to a wire 63 extending from one end of the power source 60 is electrically connected.

In addition, the other end of the upper coil 21 (the other end of each of the divided coils 21A) and the other end of the lower coil 22 (the other end of each of the divided coils 22A) are electrically connected via a wire 64. To the wire 64, the other end of the power source 60 is electrically connected via a wire 65.

According to the above configuration, a current flowing from the power source flows through the upper coil 21 and the lower coil 22 via the wire 63 and the variable resistor 62. At this time, the control unit 50 can adjust a current value flowing through the upper coil 21 and a current flowing through the lower coil 22 by controlling the slider 63a. Therefore, the current value flowing through the upper coil 21 and the current value flowing through the lower coil 22 can be made the same or different depending on a heating portion of the shaft-like body W.

The control unit 50 includes an arithmetic circuit and a memory (not illustrated). The memory stores a control program and the like for driving the arithmetic circuit.

The control unit 50 is connected to and controls the current transformer 61, the first divided coil drive unit 28a, the second divided coil drive unit 28b, the slider 63a, the coolant circulation pump 33, the motor 43, and the shaft-like body rotary motor.

For example, when traverse hardening is performed on the small diameter portion W3 of the shaft-like body W, the control unit 50 controls the first divided coil drive unit 28a and the second divided coil drive unit 28b to minimize a disposition interval between the pair of divided coils 22A as illustrated in FIG. 2(a). On the other hand, when traverse hardening is performed on the large diameter portions W1 and W5 of the shaft-like body W, the control unit 50 controls the first divided coil drive unit 28a and the second divided coil drive unit 28b to maximize a distance between the pair of divided coils 22A as illustrated in FIG. 2(b).

In addition, when traverse hardening is performed on the level difference portions W2 and W4 of the shaft-like body W, the control unit 50 controls the first divided coil drive unit 28a and the second divided coil drive unit 28b to increase and decrease a distance between the pair of divided coils 21A and a distance between the pair of divided coils 22A following diameter changes of the level difference portions W2 and W4 in the longitudinal direction along the central axis CL.

### <Traverse hardening method>

Next, a traverse hardening method of the present embodiment will be described.

FIG. 4 is a flowchart illustrating a traverse hardening method in the present embodiment.

In advance, the shaft-like body W is supported by the support portion 10 such that the central axis CL extends in the vertical direction.

First, in a disposition step S1, the control unit 50 drives the motor 43 to dispose the upper coil 21 and the lower coil 22 below the large diameter portion W1. Then, the control unit 50 controls the shaft-like body rotary motor to rotate the shaft-like body W about the central axis CL.

Subsequently, the control unit 50 controls the current transformer 61 to cause a high-frequency current to flow through the upper coil 21 and the lower coil 22. At this time, the control unit 50 makes a current value flowing through the upper coil 21 and a current value flowing through the lower coil 22 the same by controlling the slider 63a.

Furthermore, the control unit 50 drives the coolant circulation pump 33 to eject the coolant L from the plurality of nozzles 31b of the cooling ring 31 toward the shaft-like body W. In addition, a coolant is supplied to each of the upper coil 21 and the lower coil 22 to start cooling the upper coil 21 and the lower coil 22.

Furthermore, the control unit 50 controls the first divided coil drive unit 28a and the second divided coil drive unit 28b to increase the interval between the divided coils 21A of the upper coil 21 and the interval between the divided coils 22A of the lower coil 22 according to the outer diameter dimension of the large diameter portion W1.

Upon completion of the disposition step S1, the process proceeds to a first hardening step S2.

In the subsequent first hardening step S2, the control unit 50 drives the motor 43 to integrally move the upper coil 21 and the lower coil 22 in the upward direction. Then, the large diameter portion W1 is induction-heated from a lower end to an upper end thereof by the upper coil 21 and the lower coil 22. That is, an eddy current flows on a surface of the large diameter portion W1 of the shaft-like body W by the high-frequency current flowing through the upper coil 21 and the lower coil 22, and the large diameter portion W1 is induction-heated by the eddy current. At this time, since the current value supplied to the upper coil 21 and the current value supplied to the lower coil 22 are the same, a heating amount applied to the shaft-like body W by the upper coil 21 is the same as that applied by the lower coil 22.

Then, when the cooling ring 31 passes the large diameter portion W1 following the lower coil 22, the coolant L is sprayed onto an outer circumferential surface of the large diameter portion W1 after heating. As a result, the large diameter portion W1 after heating is rapidly cooled and hardened.

In a subsequent second hardening step S3, the level difference portion W2 whose diameter is gradually reduced upward is induction-heated. In the first hardening step, in the upper coil 21 and the lower coil 22, the interval between the divided coils 21A and the interval between the divided coils 22A are kept constant, respectively. However, in the present second hardening step S3, the interval between the divided coils 21A and the interval between the divided coils 22A are gradually narrowed. That is, when the level difference portion W2 is induction-heated from a lower end to an upper end thereof, the control unit 50 controls the first divided coil drive unit 28a and the second divided coil drive unit 28b to narrow the interval between the divided coils 21A and the interval between the divided coils 22A such that an air gap with the level difference portion W2 is maintained constant.

At this time, in the level difference portion W2 of the shaft-like body W, an eddy current flows on a surface of the level difference portion W2 by the high-frequency current flowing through the divided coils 21A and 22A, and the level difference portion W2 is induction-heated by the eddy current. Furthermore, when the cooling ring 31 passes the level difference portion W2 following the divided coils 21A and 22A, the coolant L is sprayed onto an outer circumferential surface of the level difference portion W2 after heating. As a result, the level difference portion W2 after heating is rapidly cooled and hardened.

In a subsequent third hardening step S4, the small diameter portion W3 having the smallest outer diameter dimension and being constant in the longitudinal direction is induction-heated. In the second hardening step S3, the interval between the divided coils 21A and the interval between the divided coils 22A are gradually narrowed, but in the present third hardening step S4, the interval between the divided coils 21A and the interval between the divided coils 22A are kept constant so as to be minimized.

That is, when the small diameter portion W3 is induction-heated from a lower end to an upper end thereof, the control unit 50 controls the first divided coil drive unit 28a and the second divided coil drive unit 28b to maintain the interval between the divided coils 21A and the interval between the divided coils 22A constant such that an air gap with the small diameter portion W3 is maintained constant. A disposition state of the divided coils 21A at this time is illustrated in FIG. 2(a).

On the other hand, in the small diameter portion W3 of the shaft-like body W, an eddy current flows on a surface of the small diameter portion W3 by the high-frequency current flowing through the divided coils 21A and the divided coils 22A, and the small diameter portion W3 is induction-heated by the eddy current. Then, when the cooling ring 31 passes the small diameter portion W3 following the divided coils 21A and the divided coils 22A, the coolant L is sprayed onto an outer circumferential surface of the small diameter portion W3 after heating. As a result, the small diameter portion W3 after heating is rapidly cooled and hardened.

In a subsequent fourth hardening step S5, the level difference portion W4 whose diameter is gradually increased upward is induction-heated. In the third hardening step S4, the interval between the divided coils 21A and the interval between the divided coils 22A are kept constant, but in the present fourth hardening step S5, the interval between the divided coils 21A and the interval between the divided coils 22A are gradually expanded.

That is, when the level difference portion W4 is induction-heated from a lower end to an upper end thereof between the divided coils 21A, the control unit 50 controls the first divided coil drive unit 28a and the second divided coil drive unit 28b to expand the interval between the divided coils 21A and the interval between the divided coils 22A such that an air gap with the level difference portion W4 is maintained constant.

On the other hand, in the level difference portion W4 of the shaft-like body W, an eddy current flows on a surface of the level difference portion W4 by the high-frequency current flowing through the divided coils 21A and the divided coils 22A, and the level difference portion W4 is induction-heated by the eddy current. Furthermore, when the cooling ring 31 passes the level difference portion W4 following the divided coils 21A and the divided coils 22A, the coolant L is sprayed onto an outer circumferential surface of the level difference portion W4 after heating. As a result, the level difference portion W4 after heating is rapidly cooled and hardened.

In a subsequent fifth hardening step S6, the large diameter portion W5 having the largest outer diameter dimension and being constant in the longitudinal direction is induction-heated. In the fourth hardening step S5, the interval between the divided coils 21A and the interval between the divided coils 22A are gradually expanded, but in the present fifth hardening step S6, the interval between the divided coils 21A and the interval between the divided coils 22A are kept constant so as to be maximized.

That is, when the large diameter portion W5 is induction-heated from a lower end to an upper end thereof, the control unit 50 controls the first divided coil drive unit 28a and the second divided coil drive unit 28b to maintain the interval between the divided coils 21A and the interval between the divided coils 22A constant such that an air gap with the large diameter portion W5 is maintained constant. A disposition state of the divided coils 21A and the divided coils 22A at this time is illustrated in FIG. 2(b).

On the other hand, in the large diameter portion W5 of the shaft-like body W, an eddy current flows on a surface of the large diameter portion W5 by the high-frequency current flowing through the divided coils 21A and the divided coils 22A, and the large diameter portion W5 is induction-heated by the eddy current. Furthermore, when the cooling ring 31 passes the large diameter portion W5 following the divided coils 21, the coolant L is sprayed onto an outer circumferential surface of the large diameter portion W5 after heating. As a result, the large diameter portion W5 after heating is rapidly cooled and hardened.

Through the steps S1 to S6 described above, the shaft-like body W is hardened over the total length thereof, and all the steps are completed. The hardness of the shaft-like body W that has been subjected to traverse hardening over the total length is higher than that before the execution of the traverse hardening.

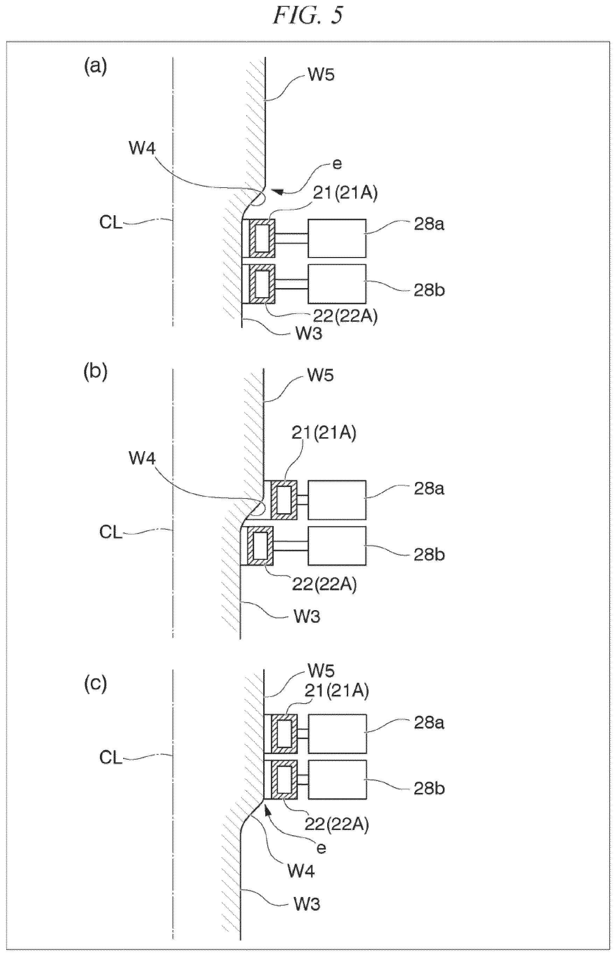

Here, in the traverse hardening method of the present disclosure, the control unit 50 individually controls the first divided coil drive unit 28a and the second divided coil drive unit 28b in each of the process in which the upper coil 21 and the lower coil 22 reach the small diameter portion W3 from the large diameter portion W1 via the level difference portion W2 and the process in which the upper coil 21 and the lower coil 22 reach the large diameter portion W5 from the small diameter portion W3 via the level difference portion W4. As a result, since each of the upper coil 21 and the lower coil 22 is independently brought close to and away from the outer circumferential surface of the shaft-like body W, for example, as illustrated in FIG. 5, each of the upper coil 21 and the lower coil 22 can be along the outer circumferential surface while corresponding to a change in the outer diameter of the shaft-like body W.

FIG. 5 is a view illustrating the process in which the upper coil 21 and the lower coil 22 reach the large diameter portion W5 from the small diameter portion W3 via the level difference portion W4. FIG. 5(a) illustrates a state in which the small diameter portion W3 is heated by both the upper coil 21 and the lower coil 22. FIG. 5(b) illustrates a state in which the small diameter portion W3 is heated by the lower coil 22 while the level difference portion W4 is heated by the upper coil 21. FIG. 5(c) illustrates a state in which the large diameter portion W5 is heated by both the upper coil 21 and the lower coil 22.

First, as illustrated in FIG. 5(a), when the small diameter portion W3 is induction-heated, the control unit 50 controls the first divided coil drive unit 28a and the second divided coil drive unit 28b to bring both the upper coil 21 and the lower coil 22 close to the outer circumferential surface of the small diameter portion W3 such that equal air gaps with the outer circumferential surface of the small diameter portion W3 are ensured. As a result, inner circumferential surfaces of the upper coil 21 and the lower coil 22 are disposed at positions having the same distance from the motion center line (central axis CL). Then, in this state, traverse hardening is performed while the upper coil 21 and the lower coil 22 are moved upward.

As described above, in FIG. 5(a), the third hardening step S4 by the upper coil 21 and the third hardening step S4 by the lower coil 22 are performed simultaneously in parallel.

In the subsequent FIG. 5(b), the fourth hardening step S5 is performed following the third hardening step S4.

That is, the upper coil 21 that has finished induction heating up to an upper end of the small diameter portion W3 performs traverse hardening on the level difference portion W4 while being gradually moved outward in the radial direction by the first divided coil drive unit 28a that has received an instruction from the control unit 50. During this traverse hardening, the control unit 50 performs control such that an air gap formed between the inner circumferential surface of the upper coil 21 and the outer circumferential surface of the level difference portion W4 is kept constant all the time. The upper coil 21 after performing traverse hardening on a range up to the upper end of the level difference portion W4 reaches a periphery of a lower end of the large diameter portion W5.

On the other hand, the lower coil 22 at this time continuously induction-heats the small diameter portion W3 while being maintained at a position having a certain distance from the motion center line (central axis CL) until reaching the upper end of the small diameter portion W3. Then, the lower coil 22 that has finished induction heating up to the upper end of the small diameter portion W3 performs traverse hardening on the level difference portion W4 while being gradually moved outward in the radial direction by the second divided coil drive unit 28b that has received an instruction from the control unit 50. During this traverse hardening, the control unit 50 performs control such that an air gap formed between the inner circumferential surface of the lower coil 22 and the outer circumferential surface of the level difference portion W4 is kept constant all the time.

As described above, in FIG. 5(b), the third hardening step S4 by the lower coil 22 and the fourth hardening step S5 by the upper coil 21 are performed simultaneously in parallel.

In the subsequent FIG. 5(c), the fifth hardening step S6 is performed.

That is, the control unit 50 controls the first divided coil drive unit 28a and the second divided coil drive unit 28b to bring both the upper coil 21 and the lower coil 22 close to the outer circumferential surface of the large diameter portion W5 such that equal air gaps with the outer circumferential surface of the large diameter portion W5 are ensured. As a result, inner circumferential surfaces of the upper coil 21 and the lower coil 22 are disposed at positions having the same distance from the motion center line (central axis CL). Then, in this state, traverse hardening is performed while the upper coil 21 and the lower coil 22 are moved upward.

As described above, in FIG. 5(c), the fifth hardening step S6 by the upper coil 21 and the fifth hardening step S6 by the lower coil 22 are performed simultaneously in parallel.

The step of heating from the small diameter portion W3 to the large diameter portion W5 via the level difference portion W4 has been described above. However, also in the step of heating from the large diameter portion W1 to the small diameter portion W3 via the level difference portion W2, traverse hardening is performed similarly while the control unit 50 individually adjusts the positions of the upper coil 21 and the lower coil 22 in the radial direction.

That is, in the second hardening step S3, the upper coil 21 that has finished induction heating up to an upper end of the large diameter portion W1 performs traverse hardening on the level difference portion W2 while being gradually moved inward in the radial direction by the first divided coil drive unit 28a that has received an instruction from the control unit 50. During this traverse hardening, the control unit 50 performs control such that an air gap formed between the inner circumferential surface of the upper coil 21 and the outer circumferential surface of the level difference portion W2 is kept constant all the time. The upper coil 21 after performing traverse hardening on a range up to the upper end of the level difference portion W2 reaches a periphery of a lower end of the small diameter portion W3.

On the other hand, the lower coil 22 at this time continuously induction-heats the large diameter portion W5 while being maintained at a position having a certain distance from the motion center line (central axis CL) until reaching the upper end of the large diameter portion W5. Then, the lower coil 22 that has finished induction heating up to an upper end of the large diameter portion W5 performs traverse hardening on the level difference portion W2 while being gradually moved inward in the radial direction by the second divided coil drive unit 28b that has received an instruction from the control unit 50. During this traverse hardening, the control unit 50 performs control such that an air gap formed between the inner circumferential surface of the lower coil 22 and the outer circumferential surface of the level difference portion W2 is kept constant all the time.

As described above, the first hardening step S2 by the lower coil 22 and the second hardening step S3 by the upper coil 21 are performed simultaneously in parallel.

In the disposition step S1 to the fifth hardening step S6 described above, traverse hardening is performed while upward movement of the divided coils 21A, the divided coils 22A, and the cooling ring 31 with respect to the shaft-like body W is continued without being stopped. Therefore, for example, when the process is shifted from the fourth hardening step S5 to the fifth hardening step S6, traverse hardening is advanced while moving speeds of the divided coils 21A, the divided coils 22A, and the cooling ring 31 are kept constant. At this time, for example, there is a portion that partially requires a sufficient heating amount, such as a corner portion e formed between the level difference portion W4 and the large diameter portion W5 illustrated in FIG. 5(a).

At the time of heating such a portion, it is also conceivable to reduce a moving speed when each of the upper coil 21 and the lower coil 22 passes the portion. However, in this case, movement of the cooling ring 31 that moves following the upper coil 21 and the lower coil 22 is also slow. Therefore, the moving speed of the cooling ring 31 cannot be made constant in the central axis CL direction, and uneven cooling occurs.

On the other hand, in the traverse hardening device of the present embodiment, as illustrated in FIG. 3, the control unit 50 individually controls a current value in the divided coils 21A and a current value in the divided coils 22A. Therefore, each of the current values can be adjusted to a current value suitable for a heating portion of the shaft-like body W. For example, when the corner portion e is heated by the divided coils 21A, by increasing a current value in the divided coils 21A, the corner portion can be sufficiently heated without reducing the moving speed of the divided coils 21A. Therefore, in this traverse hardening device, since it is not necessary to reduce the moving speed of the upper coil 21, the above-described uneven cooling does not occur.

The gist of the embodiments and modification examples described above is summarized below.
[1] A traverse hardening device according to an aspect of the present disclosure performs traverse hardening on a shaft-like body (W) in which a large diameter portion (W1, W5) having a relatively large outer diameter and a small diameter portion (W3) having a relatively small outer diameter are connected via a level difference portion (W2, W4), the device including:
   a plurality of first divided coils (21A) annularly arranged around a motion center line at a first position on the motion center line;
   a plurality of second divided coils (22A) annularly arranged around the motion center line at a second position different from the first position on the motion center line;
   a first divided coil drive unit (28a) configured to bring the first divided coils (21A) close to and away from the motion center line;
   a second divided coil drive unit (28b) configured to bring the second divided coils (22A) close to and away from the motion center line; and
   a control unit (50) configured to control the first divided coil drive unit (28a) and the second divided coil drive unit (28b).
[2] In the traverse hardening device described in the above [1], the following configuration may be adopted:
   a high-frequency power source (60) is further included, and
   the control unit (50) is configured to individually control a current value of a high-frequency current flowing from the high-frequency power source (60) to the first divided coils (21A) and a current value of a high-frequency current flowing from the high-frequency power source (60) to the second divided coils (22A).
[3] In the traverse hardening device described in the above [2], the following configuration may be adopted:
   a variable resistor (62) configured to electrically connect the first divided coils (21A) and the second divided coils (22A) and allow the high-frequency current from the high-frequency power source (60) to flow therethrough is further included, and
   the control unit (50) is configured to distribute and supply the high-frequency current from the high-frequency power source (60) to the first divided coils (21A) and the second divided coils (22A) while controlling the variable resistor (62).
[4] A traverse hardening method according to an aspect of the present disclosure is for performing traverse hardening on a shaft-like body (W) in which a large diameter portion (W1, W5) having a relatively large outer diameter and a small diameter portion (W3) having a relatively small outer diameter are connected via a level difference portion (W2, W4), the method including:
   performing the traverse hardening on the shaft-like body (W) using a plurality of first divided coils (21A) annularly arranged around a motion center line at a first position on the motion center line, and a plurality of second divided coils (22A) annularly arranged around the motion center line at a second position on the motion center line; and
   individually bringing the first divided coils (21A) and the second divided coils (22A) close to and away from an outer circumferential surface of the shaft-like body (W) during the traverse hardening.
[5] In the traverse hardening method described in the above [4], a current value of a high-frequency current flowing through the first divided coils (21A) and a current value of a high-frequency current flowing through the second divided coils (22A) may be individually controlled during the traverse hardening.

### [Examples]

Hereinafter, simulation results of Comparative Example in which induction heating was performed by a conventional traverse hardening device using a one-winding divided coil and Example in which induction heating was performed by a traverse hardening device using the divided coils 21A and 22A according to the first embodiment will be described.

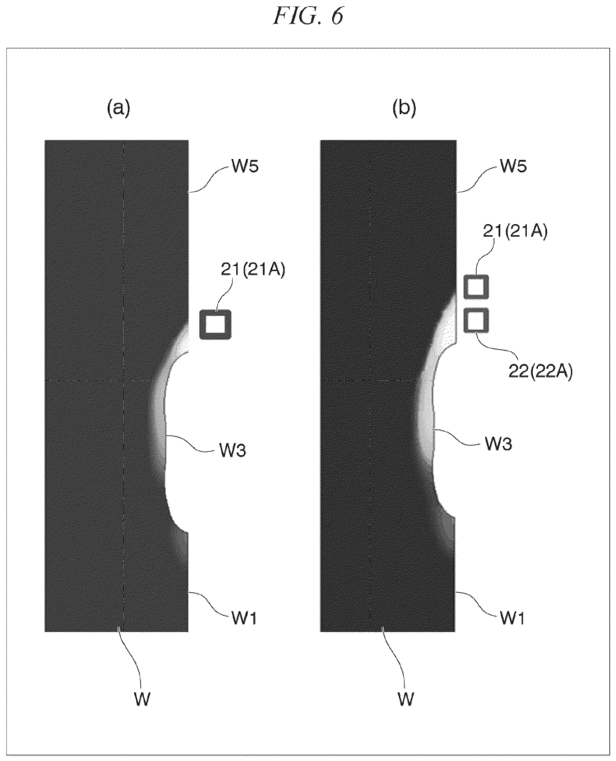

FIG. 6 is a view illustrating the simulation results, and is a longitudinal cross-sectional view of a portion including a portion B in FIG. 1. FIG. 6(a) illustrates Conventional Example, and FIG. 6(b) illustrates Example. In this simulation, the outer diameter of the large diameter portion W5 was 200 mm, and the outer diameter of the small diameter portion W3 was 170 mm. A material of the shaft-like body W was carbon steel.

As a result of the simulation, in Comparative Example illustrated in FIG. 6(a), a maximum heating temperature at the corner portion e was 1287°C. A current value flowing through the coils was 28000 A to 45000 A. Time taken to complete traverse hardening of a predetermined length was 131 seconds.

On the other hand, in Example illustrated in FIG. 6(b), a maximum heating temperature at the corner portion e was 1278°C. A current value flowing through the coils was 12600 A to 20250 A. Time taken to complete traverse hardening of a predetermined length was 132 seconds.

From the above results, it has been confirmed that the maximum current required for performing equivalent heating is halved and the current value can be significantly reduced in Example using a two-winding coil as compared with Comparative Example using a one-winding coil.

### Industrial Applicability

According to the traverse hardening device and the traverse hardening method of the present disclosure, it is possible to perform traverse hardening on the stepped shaft while suppressing overheating and short circuit of the divided coil due to a large current. Reference Signs List

21A First divided coil
22A Second divided coil
28a First divided coil drive unit
28b Second divided coil drive unit
50 Control unit
60 High-frequency power source
62 Variable resistor
W Shaft-like body
W1, W5 Large diameter portion
W2, W4 Level difference portion
W3 Small diameter portion

## Claims

1. A traverse hardening device that performs traverse hardening on a shaft-like body in which a large diameter portion having a relatively large outer diameter and a small diameter portion having a relatively small outer diameter are connected via a level difference portion, the device comprising:
a plurality of first divided coils annularly arranged around a motion center line at a first position on the motion center line;
a plurality of second divided coils annularly arranged around the motion center line at a second position different from the first position on the motion center line;
a first divided coil drive unit configured to bring the first divided coils close to and away from the motion center line;
a second divided coil drive unit configured to bring the second divided coils close to and away from the motion center line; and
a control unit configured to control the first divided coil drive unit and the second divided coil drive unit.

2. The traverse hardening device according to claim 1, further comprising
a high-frequency power source, wherein
the control unit is configured to individually control a current value of a high-frequency current flowing from the high-frequency power source to the first divided coils and a current value of a high-frequency current flowing from the high-frequency power source to the second divided coils.

3. The traverse hardening device according to claim 2, further comprising
a variable resistor configured to electrically connect the first divided coils and the second divided coils and allow the high-frequency current from the high-frequency power source to flow therethrough, wherein
the control unit configured to distribute and supply the high-frequency current from the high-frequency power source to the first divided coils and the second divided coils while controlling the variable resistor.

4. A traverse hardening method for performing traverse hardening on a shaft-like body in which a large diameter portion having a relatively large outer diameter and a small diameter portion having a relatively small outer diameter are connected via a level difference portion, the method comprising:
performing the traverse hardening on the shaft-like body using a plurality of first divided coils annularly arranged around a motion center line at a first position on the motion center line, and a plurality of second divided coils annularly arranged around the motion center line at a second position on the motion center line; and
individually bringing the first divided coils and the second divided coils close to and away from an outer circumferential surface of the shaft-like body during the traverse hardening.

5. The traverse hardening method according to claim 4, comprising
individually controlling a current value of a high-frequency current flowing through the first divided coils and a current value of a high-frequency current flowing through the second divided coils during the traverse hardening.
